# EUROPEAN PATENT SPECIFICATION

(11) **EP 4 207 475 B1**
(45) Date of publication and mention of the grant of the patent: **18.02.2026**
(21) Application number: 20955718.0
(22) Date of filing: 30.09.2020
(51) Int. Cl.: H01M 50/519, H01M 50/516

(54) **BATTERY MODULE, BATTERY PACK, AND ELECTRONIC DEVICE**
BATTERIEMODUL, BATTERIEPACK UND ELEKTRONISCHE VORRICHTUNG
MODULE DE BATTERIE, BLOC-BATTERIE ET DISPOSITIF ÉLECTRONIQUE

(43) Date of publication of application: 05.07.2023
(73) Proprietor: NINGDE AMPEREX TECHNOLOGY LIMITED, Ningde City, Fujian Province 352100 (CN)
(72) Inventor: WANG, Shenbo, Dongguan City, Guangdong Province, 523000 (CN); WU, Kecheng, Dongguan City, Guangdong Province, 523000 (CN)
(74) Representative: Icosa
(86) International application number: PCT/CN2020/119462
(87) International publication number: WO 2022/067693

(56) References cited:
- CN-A- 111 247 684
- CN-U- 201 781 031
- CN-U- 205 488 322
- US-A1- 2016 301 044

## Description

### TECHNICAL FIELD

This application relates to the field of batteries, and in particular, to a battery module, a battery pack containing the battery module, and an electronic device.

### BACKGROUND

With the miniaturization of wearable electronic devices, electronic devices have imposed higher requirements on batteries, and space available for a battery in an electronic device is smaller. In addition, the shape of a battery compartment in the electronic device is mostly irregular. How to rationally utilize internal space of the battery and increase an energy density of the battery has become a problem to be solved.

US 2016/301044 A1 discloses a flexible battery pack comprising a plurality of battery cells inclined with respect to each other. A controller may be removably mounted to a control module, which is inclined with respect to the battery cell at its right but does not have a battery cell at its left. The control circuit may also be positioned between two battery cells. The flexible battery pack can be positioned with the battery cells inclined with respect to each other, so that the control circuit would be inclined with respect to the battery cell positioned at its right and also with respect to the battery cell positioned at its left.

### SUMMARY

The invention is set out in the appended set of claims. The dependent claims set out particular embodiments. In view of the fact above, this application provides a battery module and a battery containing the battery module.

The invention provides a battery module. The battery module includes a cell assembly and a first circuit board. The cell assembly includes a plurality of battery cells. The plurality of battery cells are connected to the first circuit board. The plurality of battery cells include a first battery cell and a second battery cell, and the first battery cell is inclined with respect to the second battery cell. The first circuit board is disposed between the first battery cell and the second battery cell, the first circuit board is inclined with respect to the first battery cell, and the first circuit board is inclined with respect to the second battery cell.

Each battery cell includes a housing and an electrode assembly accommodated in the housing, and the electrode assembly includes a tab. The housing includes a first main plane and a second main plane disposed opposite to each other along a thickness direction of the battery cell. A seal edge is disposed at one end of the housing along a length direction of the battery cell. The tab extends out of the housing from the seal edge. The first battery cell includes a first tab. The second battery cell includes a second tab. The first tab is opposite to the second tab. The housing further includes a first surface connects the seal edge and the first main plane. A second surface connects the seal edge and the second main plane. A width of the first surface is greater than a width of the second surface along the thickness direction. One end of the first circuit board tilts closer to the first surface of the first battery cell, and an opposite end of the first circuit board tilts closer to the first surface of the second battery cell.

In some embodiments, the first circuit board is disposed between the first tab and the second tab.

In some embodiments, the first tab includes a first soldering portion, and the second tab includes a second soldering portion. The battery module includes a first connecting strip and a second connecting strip. The first connecting strip includes a first fixing portion and a first connecting portion. The first fixing portion is soldered to the first circuit board. The first connecting portion is welded to the first soldering portion. The first soldering portion is disposed between the first fixing portion and the first connecting portion. The second connecting strip includes a second fixing portion and a second connecting portion. The second fixing portion is soldered to the first circuit board. The second connecting portion is welded to the second soldering portion. The second soldering portion is disposed between the second fixing portion and the second connecting portion.

In some embodiments, the first fixing portion and the first connecting portion clamp the first soldering portion. One surface of the first soldering portion is in contact with the first connecting portion, and an opposite surface of the first soldering portion is in contact with the first fixing portion. The second fixing portion and the second connecting portion clamp the second soldering portion. One surface of the second soldering portion is in contact with the second connecting portion, and an opposite surface of the second soldering portion is in contact with the second fixing portion.

In some embodiments, the first soldering portion is disposed between the first surface of the first battery cell and the first circuit board. The second soldering portion is disposed between the second surface of the second battery cell and the first circuit board.

In some embodiments, the first circuit board includes a first side and a second side that are disposed opposite to each other. The first tab is disposed on the first side, and the second tab is disposed on the second side.

In some embodiments, the first circuit board is at an acute angle to the seal edge of the first battery cell, and the acute angle ranges from 30° to 60°.

In some embodiments, the battery module further includes a first insulation piece and a second insulation piece. The first insulation piece wraps at least a part of the seal edge of the first battery cell. The second insulation piece wraps at least a part of the seal edge of the second battery cell.

In some embodiments, a first opening is provided on the first insulation piece. The first tab protrudes from the first opening. A second opening is provided on the second insulation piece. The second tab protrudes from the second opening.

An embodiment of this application further provides a battery pack. The battery pack includes a shell and the battery module according to any one of the foregoing some embodiments. The battery module is accommodated in the shell.

In some embodiments, the battery pack further includes a second circuit board. One end of the second circuit board is connected to the first circuit board of the battery module. Another end of the second circuit board protrudes out of the shell.

In some embodiments, the shell includes an arc bottom plate. A first groove and a second groove are provided on an inner sidewall of the arc bottom plate. The battery pack further includes a first spacer and a second spacer. The first spacer is disposed between the first battery cell of the battery module and the first groove. The second spacer is disposed between the second battery cell of the battery module and the second groove.

In some embodiments, the first spacer covers the first groove, and the second spacer covers the second groove.

In some embodiments, an arc radius of the arc bottom plate is 85 to 110 mm.

In some embodiments, the shell further includes a side plate and an arc cover plate. The side plate is disposed around the arc bottom plate. The arc cover plate is fixedly connected to the side plate. An arc radius of the arc cover plate is 80 to 100 mm.

In some embodiments, the battery pack further includes a fastener. The fastener includes a first bracket, a second bracket, and a connecting portion. The first bracket and the second bracket are disposed on two opposite sides of the connecting portion respectively. The first battery cell of the battery module is held by the first bracket, the second battery cell is held by the second bracket, and the first circuit board is attached to the connecting portion.

In some embodiments, resin is disposed in the shell and is configured to fill a clearance between the shell and the cell assembly of the battery module.

In some embodiments, an injection hole is provided on the shell. The resin fills the shell by low-pressure injection molding.

An embodiment of this application further provides an electronic device. The electronic device includes an electrical component and the battery pack according to any one of some embodiments described above. The electrical component is electrically connected to the battery pack.

In some embodiments, the battery cell is a pouch-type cell, and the tab is made of a material that is a conductive metal or alloy, such as copper, aluminum, nickel, nickel-clad copper, nickel-clad aluminum, or the like.

An embodiment of this application further provides an electronic device. The electronic device includes an electrical component and the battery pack according to any one of some embodiments described above. The electrical component is electrically connected to the battery pack.

The first battery cell of the battery module is inclined with respect to the second battery cell. The first circuit board is disposed between the first battery cell and the second battery cell. The first circuit board is inclined with respect to the first battery cell, and the first circuit board is inclined with respect to the second battery cell. The space inside a battery is sufficiently utilized by disposing the first circuit board in the space between the first battery cell and the second battery cell, thereby effectively improving an energy density. Further, the battery cell is a pouch-type cell. The tab of the pouch-type cell are highly bendable. The tab may be bent at a tilt angle of the battery cell to the circuit board, thereby further improving space efficiency.

### BRIEF DESCRIPTION OF THEDRAWINGS

FIG. 1 is a three-dimensional schematic structural diagram of a battery pack according to an embodiment;
FIG. 2 is a schematic sectional view of a structure of the battery pack shown in FIG. 1;
FIG. 3 is a side view of a battery cell in the battery pack shown in FIG. 1;
FIG. 4 is a schematic sectional view of a structure of the battery cell shown in FIG. 3;
FIG. 5 is a schematic structural diagram of a battery module of the battery pack shown in FIG. 2;
FIG. 6 is a close-up view of a local structure of the battery module shown in FIG. 5;
FIG. 7 is a schematic sectional view of a structure of the battery module shown in FIG. 5;
FIG. 8 is a close-up view of a local structure of the battery module shown in FIG. 7;
FIG. 9 is a schematic structural diagram of a first battery cell in the battery module shown in FIG. 5;
FIG. 10 is a schematic structural diagram of a second battery cell in the battery module shown in FIG. 5;
FIG. 11 is a side view of the battery pack shown in FIG. 1;
FIG. 12 is a schematic structural diagram of a part of a shell of the battery pack shown in FIG. 1;
FIG. 13 is a schematic structural exploded view of a battery pack according to an embodiment; and
FIG. 14 is a brief structural diagram of an electronic device according to an embodiment.

**Reference numerals of main components:**

| | |
|---|---|
| Battery module | 100 |
| Battery cell | 10 |
| Housing | 101 |
| First main plane | 1011 |
| Second main plane | 1012 |
| Seal edge | 1013 |
| First surface | 1014 |
| Second surface | 1015 |
| Electrode assembly | 102 |
| Tab | 103 |
| First battery cell | 11 |
| First tab | 113 |
| First soldering portion | 1131 |
| Second battery cell | 12 |
| Second tab | 123 |
| Second soldering portion | 1231 |
| Spacer | 14 |
| First circuit board | 20 |
| First side | 21 |
| Second side | 22 |
| First connecting strip | 30 |
| First fixing portion | 31 |
| First connecting portion | 32 |
| Second connecting strip | 40 |
| Second fixing portion | 41 |
| Second connecting portion | 42 |
| Insulation piece | 50 |
| First insulation piece | 51 |
| First opening | 511 |
| Second insulation piece | 52 |
| Second opening | 521 |
| Second circuit board | 60 |
| Shell | 70 |
| Arc bottom plate | 71 |
| First groove | 711 |
| Second groove | 712 |
| Side plate | 72 |
| Injection hole | 721 |
| Arc cover plate | 73 |
| First spacer | 81 |
| Second spacer | 82 |
| Fastener | 90 |
| First bracket | 91 |
| Second bracket | 92 |
| Connecting portion | 93 |
| Through-hole | 931 |
| Battery pack | 200 |
| Electronic device | 300 |
| Electrical component | 301 |

### DETAILED DESCRIPTION OF EMBODIMENTS

The following clearly and thoroughly describes the technical solutions in some embodiments of this application with reference to the drawings hereto. Evidently, the described some embodiments are merely a part of but not all of some embodiments of this application.

It is hereby noted that a component referred to as being "fixed to" another component may be directly fixed onto the other component or may be fixed onto the other component through an intermediate component. A component considered to be "connected to" another component may be directly connected to the other component or may be connected to the other component through an intermediate component. A component considered to be "disposed on" another component may be directly disposed on the other component or may be disposed on the other component through an intermediate component. The terms "vertical", "horizontal", "left", "right" and similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific some embodiments but not to limit this application. The term "and/or" used herein is intended to include any and all combinations of one or more relevant items recited.

An embodiment of this application provides a battery module. The battery module includes a cell assembly and a first circuit board. The cell assembly includes a plurality of battery cells. The plurality of battery cells are connected to the first circuit board. The plurality of battery cells include a first battery cell and a second battery cell, and the first battery cell is inclined with respect to the second battery cell. The first circuit board is disposed between the first battery cell and the second battery cell, the first circuit board is inclined with respect to the first battery cell, and the first circuit board is inclined with respect to the second battery cell.

In the battery module, the space inside a battery is sufficiently utilized by disposing the first circuit board in the space between the first battery cell and the second battery cell, thereby effectively improving an energy density.

The following describes some embodiments of this application in detail. To the extent that no conflict occurs, the following some embodiments and the features in some embodiments may be combined with each other.

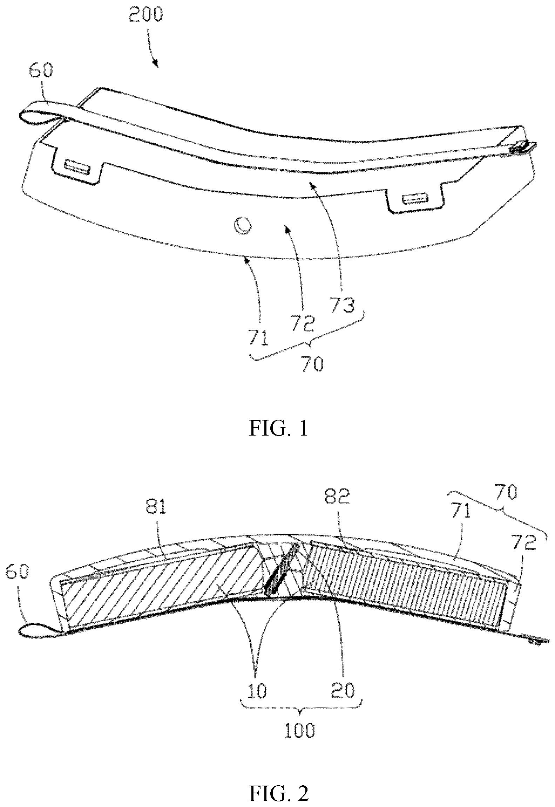

Referring to FIG. 1 and FIG. 2, in an embodiment, the battery pack 200 includes a battery module 100 and a shell 70. The battery module 100 is accommodated in the shell 70. The battery module 100 includes a cell assembly and a first circuit board 20. The cell assembly includes a plurality of battery cells 10. The battery cells 10 are connected to the first circuit board 20.

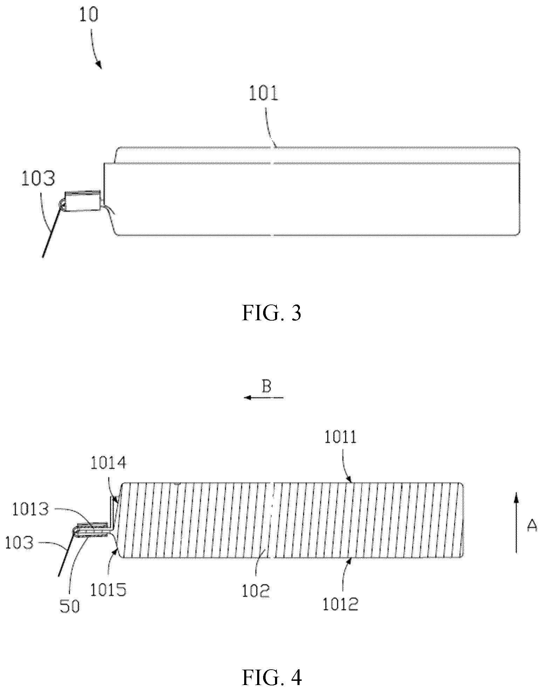

Still referring to FIG. 3 and FIG. 4, in an embodiment of this application, the plurality of battery cells 10 are pouch-type cells. Each battery cell 10 includes a housing 101 and an electrode assembly 102 accommodated in the housing 101. The electrode assembly 102 includes a tab 103. The tab 103 extends out of the housing 101. Along a thickness direction of the battery cell 10, that is, a direction indicated by the arrow A in FIG. 4, the housing 101 includes a first main plane 1011 and a second main plane 1012 that are disposed opposite to each other. Further, a seal edge 1013 is disposed at one end of the housing 101 along a length direction of the battery cell 10, that is, a direction indicated by the arrow B in FIG. 4. The tab 103 extends out of the housing 101 from the seal edge 1013. The housing 101 further includes a first surface 1014 and a second surface 1015. The first surface 1014 connects the seal edge 1013 and the first main plane 1011. The second surface 1015 connects the seal edge 1013 and the second main plane 1012. Along the thickness direction, the width of the first surface 1014 is greater than the width of the second surface 1015.

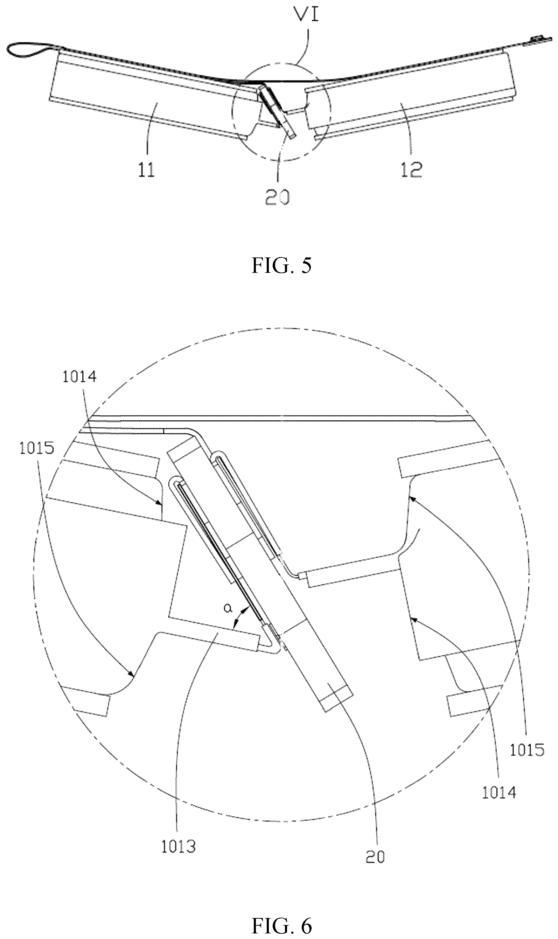

Referring to FIG. 5 and FIG. 6, in an embodiment of this application, the plurality of battery cells 10 include a first battery cell 11 and a second battery cell 12. The first battery cell 11 is inclined with respect to the second battery cell 12. The structure of the first battery cell 11 is approximately identical to the structure of the second battery cell 12. In some embodiments, the plurality of battery cells 10 may further include a third battery cell, a fourth battery cell, and the like, without being limited in this application. The first circuit board 20 is disposed between the first battery cell 11 and the second battery cell 12. The first circuit board 20 is inclined with respect to the first battery cell 11, and the first circuit board 20 is inclined with respect to the second battery cell 12. In the battery module 100, the first circuit board 20 is disposed in the space vacated by tilting between the first battery cell 11 and the second battery cell 12, thereby sufficiently utilizing the space inside the battery and effectively increasing the energy density.

One end of the first circuit board 20 tilts closer to the first surface 1014 of the first battery cell 11, and an opposite end of the first circuit board 20 tilts closer to the first surface 1014 of the second battery cell 12. Because the width of the first surface 1014 is greater than the width of the second surface 1015, the first circuit board 20 can be disposed more efficiently by use of the relatively large width of the first surface 1014 when both opposite ends of the first circuit board 20 tilt toward the first surface 1014. The first circuit board 20 is at an acute angle a to the seal edge 1013 of the first battery cell 11. The range of the acute angle a may be adjusted according to the tilt angle of the battery cell 10 and the tilt angle of the first circuit board 20. A preferred acute angle range is 30° to 60°.

The first surface 1014 of the first battery cell 11 is opposite to the second surface 1015 of the second battery cell 12. The second surface 1015 of the first battery cell 11 is opposite to the first surface 1014 of the second battery cell 12.

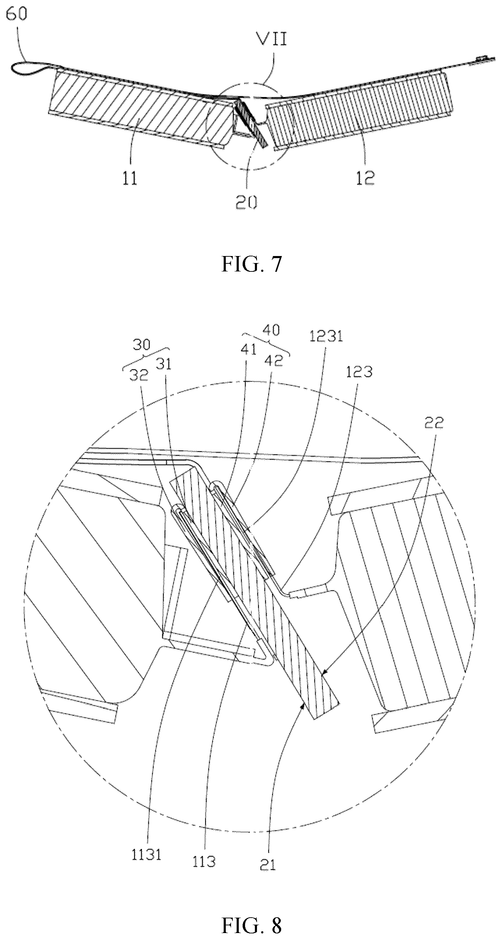

Still referring to FIG. 7 and FIG. 8, the first battery cell 11 includes a first tab 113. The second battery cell 12 includes a second tab 123. The first tab 113 is opposite to the second tab 123. The first circuit board 20 is disposed between the first tab 113 and the second tab 123. The first tab 113 tilts closer to the first surface 1014 of the first battery cell 11, and the second tab 123 tilts closer to the second surface 1015 of the second battery cell 12. The first circuit board 20 includes a first side 21 and a second side 22 that are disposed opposite to each other. The first tab 113 is disposed on the first side 21. The second tab 123 is disposed on the second side 22. The first tab 113 and the second tab 123 may be directly soldered to the first circuit board 20, for example, by SMT or DIP, or may be connected to the first circuit board 20 by other connecting strips. The first tab 113 and the second tab 123 are made of a conductive metal or alloy, such as copper, aluminum, nickel, nickel-clad copper, nickel-clad aluminum, and the like. The first tab 113 and the second tab 123 is highly bendable, and can be bent by different angles as required by the battery module 100, thereby occupying a smaller space.

Still referring to FIG. 7 and FIG. 8, in this embodiment, the battery module 100 further includes a first connecting strip 30 and a second connecting strip 40. The first connecting strip 30 is configured to connect the first tab 113 and the first circuit board 20. The second connecting strip 40 is configured to connect the second tab 123 and the first circuit board 20. The first tab 113 includes a first soldering portion 1131, and the second tab 123 includes a second soldering portion 1231. The first connecting strip 30 includes a first fixing portion 31 and a first connecting portion 32. The first fixing portion 31 is soldered to the first circuit board 20. The first connecting portion 32 is welded to the first soldering portion 1131. The first soldering portion 1131 is disposed between the first fixing portion 31 and the first connecting portion 32. The second connecting strip 40 includes a second fixing portion 41 and a second connecting portion 42. The second fixing portion 41 is soldered to the first circuit board 20. The second connecting portion 42 is welded to the second soldering portion 1231. The second soldering portion 1231 is disposed between the second fixing portion 41 and the second connecting portion 42.

To facilitate the manufacture of the battery module 100, before the battery cell 10 is connected to the first circuit board 20, the first connecting strip 30 and the second connecting strip 40 are of an L-shaped structure. The first fixing portion 31 is approximately perpendicular to the first connecting portion 32. The second fixing portion 41 is approximately perpendicular to the second connecting portion 42. The first soldering portion 1131 is welded to the first connecting portion 32, the second soldering portion 1231 is welded to the second connecting portion 42. The first fixing portion 31 is soldered to the first circuit board 20, the second fixing portion 41 is soldered to the first circuit board 20. The first battery cell 11 and the second battery cell 12 are perpendicular to the first circuit board 20. Subsequently, the first tab 113 and the second tab 123 are bent so that the first soldering portion 1131 is sandwiched between the first fixing portion 31 and the first connecting portion 32. The second soldering portion 1231 is sandwiched between the second fixing portion 41 and the second connecting portion 42. In addition, the second battery cell 12 is inclined with respect to the first battery cell 11. The first circuit board 20 is inclined with respect to the first battery cell 11, the first circuit board 20 is inclined with respect to the second battery cell 12. By disposing the first connecting strip 30 and the second connecting strip 40, the space of the first circuit board 20 can be utilized more efficiently. For example, the first fixing portion 31 and the second fixing portion 41 may be soldered onto different positions of the circuit board according to the design of the first circuit board 20. In addition, the connecting strips facilitate control of the bending angle. For example, the first fixing portion 31 and the first connecting portion 32 may be bent to form different angles as required.

In this embodiment, the first fixing portion 31 and the first connecting portion 32 clamp the first soldering portion 1131. One surface of the first soldering portion 1131 is in contact with the first connecting portion 32, and an opposite surface of the first soldering portion 1131 is in contact with the first fixing portion 31. The second fixing portion 41 and the second connecting portion 42 clamp the second soldering portion 1231. One surface of the second soldering portion 1231 is in contact with the second connecting portion 42, and an opposite surface of the second soldering portion 1231 is in contact with the second fixing portion 41. Through contact and clamping, the first connecting strip 30 can be fixed to the first soldering portion 1131 more stably, thereby preventing the first connecting strip 30 from detaching from the first soldering portion 1131 in the case of dropping or in other cases. In other examples, the opposite surface of the first soldering portion 1131 may be fixedly connected to the first fixing portion 31 in other ways such as gluing.

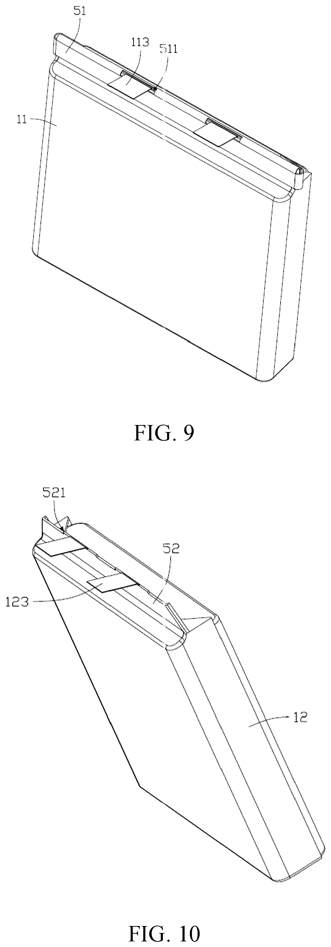

Referring to FIG. 4, FIG. 9, and FIG. 10, the battery module 100 further includes an insulation piece 50. The insulation piece 50 wraps at least a part of a seal edge 1013 of the battery cell 10. The insulation piece 50 includes a first insulation piece 51 and a second insulation piece 52. The first insulation piece 51 wraps at least a part of the seal edge 1013 of the first battery cell 11. The second insulation piece 52 wraps at least a part of the seal edge 1013 of the second battery cell 12. A first opening 511 is provided on the first insulation piece 51. The first tab 113 protrudes from the first opening 511. A second opening 521 is provided on the second insulation piece 52. The second tab 123 protrudes from the second opening 521. The insulation piece 50 can support the seal edge 1013 on the one hand to prevent deformation, and can isolate the tab 103 on the other hand to reduce the probability of short circuits.

Still referring to FIG. 1 and FIG. 2, the battery pack 200 further includes a second circuit board 60. One end of the second circuit board 60 is connected to the first circuit board 20. Another end of the second circuit board 60 protrudes out of the shell 70. In an embodiment of this application, the second circuit board 60 is a flexible circuit board. Along the length direction of the cell assembly, the second circuit board 60 protrudes from one side of the shell 70.

The battery pack 200 further includes a spacer 14. The spacer 14 is disposed on the first main plane 1011 and the second main plane 1012 of the battery cell 10 along the thickness direction of the battery cell 10. The spacer 14 is made of a material including but not limited to foam, and is configured to absorb an expansion volume of the battery cell 10.

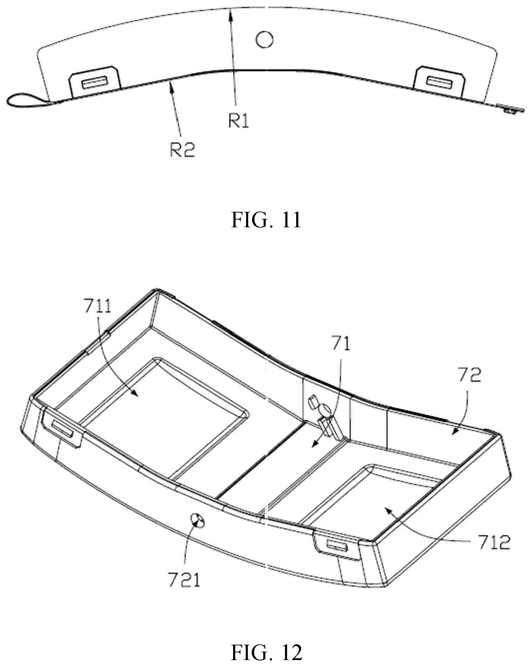

The shell includes an arc bottom plate 71, side plates 72 disposed around the arc bottom plate 71, and an arc cover plate 73. The side plates 72 and the arc bottom plate 71 are formed in one piece. Lateral edges of the arc cover plate 73 are fixedly connected to the side plates 72 by, but without being limited to, snapping, riveting, welding, gluing, or the like. To reduce damage to the shell 70, the second circuit board 60 protrudes from between the arc cover plate 73 and one of the side plates 72. Referring to FIG. 11, an arc radius R1 of the arc bottom plate 71 is 85 to 110 mm, and an arc radius R2 of the arc cover plate 73 is 80 to 100 mm. In this embodiment, the arc bottom plate 71 is a plastic part formed in one piece, and the arc cover plate 73 is a steel sheet. The steel sheet improves the resistance-to-impact of the battery pack 200 impacted by an external force. The integrally formed steel sheet avoids harm to the user during failure of the battery. In an embodiment, the battery pack 200 is applicable to headsets. The arc cover plate 73 is close to the user's head. The steel sheet is stronger than a plastic piece. When the battery fails, the arc bottom plate 71 is damaged first, thereby protecting the head.

Referring to FIG. 2 and FIG. 12, a first groove 711 and a second groove 712 are disposed in the inner sidewall of the arc bottom plate 71, and are configured to provide an expansion space for the first battery cell 11 and the second battery cell 12 respectively. The battery pack 200 further includes a first spacer 81 and a second spacer 82. The first spacer 81 is disposed between the first battery cell 11 and the first groove 711. The second spacer 82 is disposed between the second battery cell 12 and the second groove 712. The first spacer 81 covers the first groove 711, and the second spacer 82 covers the second groove 712. The first spacer 81 and the second spacer 82 are configured to support the first battery cell 11 and the second battery cell 12.

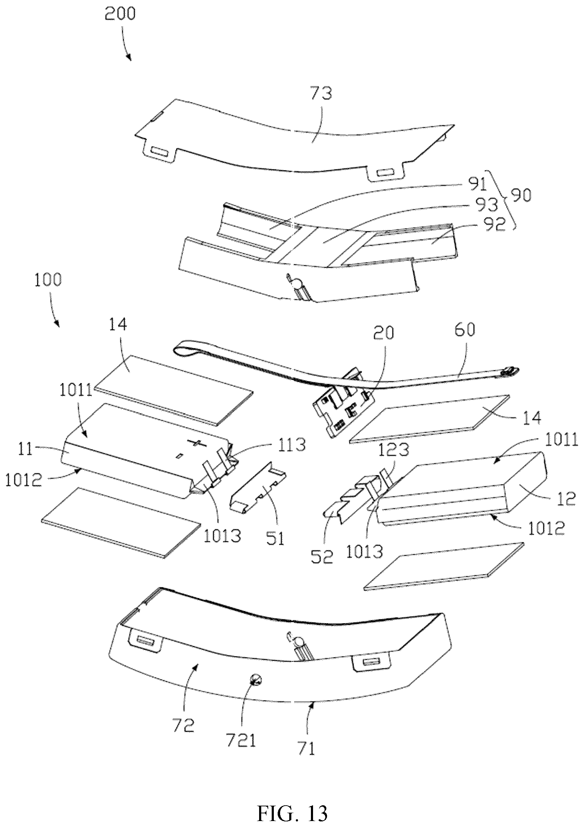

Referring to FIG. 13, in another embodiment, the structure of the battery pack 200 is approximately identical to that in the preceding embodiment except that the battery pack 200 further includes a fastener 90 configured to fix the cell assembly. The fastener 90 is accommodated in a space between the shell 70 and the cell assembly. The fastener 90 includes a first bracket 91, a second bracket 92, and a connecting portion 93. The first bracket 91 and the second bracket 92 are disposed on two opposite sides of the connecting portion 93 respectively. The first bracket 91 is inclined with respect to the connecting portion 93, and the second bracket 92 is inclined with respect to the connecting portion 93. The first battery cell 11 is held by the first bracket 91, and the second battery cell 12 is held by the second bracket 92. The first circuit board 20 is attached obliquely to the connecting portion 93. In other embodiments, the fastener 90 is resin that fills the space between the shell 70 and the cell assembly. The resin fills a clearance between the shell 70 and the cell assembly to fix the cell assembly. The resin may be plastic. An injection hole 721 is provided on the side plate 72 of the shell 70. The resin is injected to fill in the shell 70 through the injection hole 721 by low-pressure injection molding. The resin can flow from a through-hole 931 into the clearance between the first battery cell 11, the second battery cell 12, and the first circuit board 20, so as to ensure that the clearance can be filled. The battery pack 200 filled with the resin is waterproof. In addition, the resin exerts a protective effect on the battery cell 10 to some extent to prevent damage to the battery cell 10 that is dropped accidentally or in other circumstances. In other embodiments, the resin is a potting glue. The potting glue is injected to fill in the shell 70 through the injection hole 721. In other embodiments, the fastener 90 may include a fixing bracket and resin concurrently to implement securer fixing.

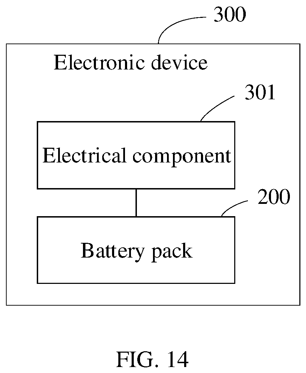

Referring to FIG. 14, an embodiment of this application further provides an electronic device 300. The electronic device 300 includes an electrical component 301 and the battery pack 200 according to any one or any combination of some embodiments described above. The electrical component 301 is electrically connected to the battery pack 200.

## Claims

1. A battery module (100), comprising:
a cell assembly comprising a plurality of battery cells (10); and
a first circuit board (20), the plurality of battery cells (10) are connected to the first circuit board (20);
wherein the plurality of battery cells (10) comprise a first battery cell (11) and a second battery cell (12), and the first battery cell (11) is inclined with respect to the second battery cell (12);
the first circuit board (20) is disposed between the first battery cell (11) and the second battery cell (12), the first circuit board (20) is inclined with respect to the first battery cell (11), and the first circuit board (20) is inclined with respect to the second battery cell (12); and
wherein each battery cell (10) comprises a housing (101) and an electrode assembly (102) accommodated in the housing (101), and the electrode assembly (102) comprises a tab (103);
**characterized in that** the housing (101) comprises a first main plane (1011) and a second main plane (1012) disposed opposite to each other along a thickness direction of the battery cell (10), a seal edge (1013) is disposed at one end of the housing (101) along a length direction of the battery cell (10), and the tab (103) extends out of the housing (101) from the seal edge (1013);
the housing (101) further comprises a first surface and a second surface (1015), the first surface connects the seal edge (1013) and the first main plane (1011), the second surface (1015) connects the seal edge (1013) and the second main plane (1012), and a width of the first surface (1014) is greater than a width of the second surface (1015) along the thickness direction.

2. The battery module (100) according to claim 1, wherein the first battery cell (11) comprises a first tab (113), the second battery cell (12) comprises a second tab (123), and the first tab (113) is disposed opposite to the second tab (123);
the first circuit board (20) is disposed between the first tab (113) and the second tab (123).

3. The battery module (100) according to claim 2, wherein the first tab (113) comprises a first soldering portion (1131), and the second tab (123) comprises a second soldering portion (1231);
the battery module (100) comprises a first connecting strip (30) and a second connecting strip (40);
the first connecting strip (30) comprises a first fixing portion (31) and a first connecting portion (32), the first fixing portion (31) is soldered to the first circuit board (20), the first connecting portion (32) is welded to the first soldering portion (1131), and the first soldering portion (1131) is disposed between the first fixing portion (31) and the first connecting portion (32); and
the second connecting strip (40) comprises a second fixing portion (41) and a second connecting portion (42), the second fixing portion (41) is soldered to the first circuit board (20), the second connecting portion (42) is welded to the second soldering portion (1231), and the second soldering portion (1231) is disposed between the second fixing portion (41) and the second connecting portion (42).

4. The battery module (100) according to claim 3, wherein the first fixing portion (31) and the first connecting portion (32) clamp the first soldering portion (1131), one surface of the first soldering portion (1131) is in contact with the first connecting portion (32), and an opposite surface of the first soldering portion (1131) is in contact with the first fixing portion (31); and
the second fixing portion (41) and the second connecting portion (42) clamp the second soldering portion (1231), one surface of the second soldering portion (1231) is in contact with the second connecting portion (42), and an opposite surface of the second soldering portion (1231) is in contact with the second fixing portion (41).

5. The battery module (100) according to claim 3, wherein the first soldering portion (1131) is disposed between the first surface (1014) of the first battery cell (11) and the first circuit board (20), and the second soldering portion (1231) is disposed between the second surface (1015) of the second battery cell (12) and the first circuit board (20).

6. The battery module (100) according to claim 3, wherein the first circuit board (20) comprises a first side (21) and a second side (22) disposed opposite to each other, the first tab (113) is disposed on the first side (21), and the second tab (123) is disposed on the second side (22).

7. The battery module (100) according to any one of claims 2 to 6, wherein the battery module (100) further comprises a first insulation piece (51) and a second insulation piece (52), the first insulation piece (51) wraps at least a part of the seal edge (1013) of the first battery cell (11), and the second insulation piece (52) wraps at least a part of the seal edge (1013) of the second battery cell (12).

8. The battery module (100) according to claim 7, wherein a first opening (511) is provided on the first insulation piece (51), the first tab (113) protrudes from the first opening (511), a second opening (521) is provided on the second insulation piece (52), and the second tab (123) protrudes from the second opening (521).

9. A battery pack (200), wherein the battery pack (200) comprises a shell (70) and the battery module (100) according to any one of claims 1 to 8, and the battery module (100) is accommodated in the shell (70).

10. The battery pack (200) according to claim 9, wherein the battery pack (200) further comprises a second circuit board (60), one end of the second circuit board (60) is connected to the first circuit board (20) of the battery module (100), and another end of the second circuit board (60) protrudes out of the shell (70).

11. The battery pack (200) according to claim 10, wherein the shell (70) comprises an arc bottom plate (71), a first groove (711) and a second groove (712) are provided on an inner sidewall of the arc bottom plate (71);
the battery pack (200) further comprises a first spacer (81) and a second spacer (82);
the first spacer (81) is disposed between the first battery cell (11) of the battery module (100) and the first groove (711), and the second spacer (82) is disposed between the second battery cell (12) of the battery module (100) and the second groove (712).

12. The battery pack (200) according to claim 9, wherein fastener (90) is resin, the fastener (90) is configured to fill a clearance between the shell (70) and the cell assembly of the battery module (100).

13. The battery pack (200) according to claim 12, wherein an injection hole (721) is provided on the shell (70), and the resin fills the shell (70) by low-pressure injection molding.

14. An electronic device (300), wherein the electronic device (300) comprises an electrical component (301) and the battery pack (200) according to any one of claims 9 to 13, and the electrical component (301) is electrically connected to the battery pack (200).

## Patentansprüche

1. Batteriemodul (100), umfassend:
eine Zellbaugruppe, die eine Vielzahl von Batteriezellen (10) umfasst; und
eine erste Leiterplatte (20), wobei die Vielzahl von Batteriezellen (10) mit der ersten Leiterplatte (20) verbunden ist;
wobei die Vielzahl von Batteriezellen (10) eine erste Batteriezelle (11) und eine zweite Batteriezelle (12) umfasst und die erste Batteriezelle (11) gegenüber der zweiten Batteriezelle (12) geneigt ist;
wobei die erste Leiterplatte (20) zwischen der ersten Batteriezelle (11) und der zweiten Batteriezelle (12) angeordnet ist, wobei die erste Leiterplatte (20) gegenüber der ersten Batteriezelle (11) geneigt ist und wobei die erste Leiterplatte (20) gegenüber der zweiten Batteriezelle (12) geneigt ist; und
wobei jede Batteriezelle (10) ein Gehäuse (101) und eine in dem Gehäuse (101) aufgenommene Elektrodenbaugruppe (102) umfasst, wobei die Elektrodenbaugruppe (102) eine Lasche (103) umfasst;
**dadurch gekennzeichnet, dass** das Gehäuse (101) eine erste Hauptebene (1011) und eine zweite Hauptebene (1012) umfasst, die entlang einer Dickenrichtung der Batteriezelle (10) einander gegenüberliegend angeordnet sind, wobei an einem Ende des Gehäuses (101) entlang einer Längsrichtung der Batteriezelle (10) eine Dichtungskante (1013) angeordnet ist und sich die Lasche (103) von der Dichtungskante (1013) aus aus dem Gehäuse (101) heraus erstreckt;
wobei das Gehäuse (101) ferner eine erste Oberfläche (1014) und eine zweite Oberfläche (1015) umfasst, wobei die erste Oberfläche (1014) die Dichtungskante (1013) und die erste Hauptebene (1011) verbindet, die zweite Oberfläche (1015) die Dichtungskante (1013) und die zweite Hauptebene (1012) verbindet und eine Breite der ersten Oberfläche (1014) entlang der Dickenrichtung größer ist als eine Breite der zweiten Oberfläche (1015).

2. Batteriemodul (100) nach Anspruch 1, wobei die erste Batteriezelle (11) eine erste Lasche (113) umfasst, die zweite Batteriezelle (12) eine zweite Lasche (123) umfasst und die erste Lasche (113) der zweiten Lasche (123) gegenüberliegend angeordnet ist;
wobei die erste Leiterplatte (20) zwischen der ersten Lasche (113) und der zweiten Lasche (123) angeordnet ist.

3. Batteriemodul (100) nach Anspruch 2, wobei die erste Lasche (113) einen ersten Lötabschnitt (1131) umfasst und die zweite Lasche (123) einen zweiten Lötabschnitt (1231) umfasst;
wobei das Batteriemodul (100) einen ersten Verbindungsstreifen (30) und einen zweiten Verbindungsstreifen (40) umfasst;
wobei der erste Verbindungsstreifen (30) einen ersten Befestigungsabschnitt (31) und einen ersten Verbindungsabschnitt (32) umfasst, wobei der erste Befestigungsabschnitt (31) mit der ersten Leiterplatte (20) verlötet ist, der erste Verbindungsabschnitt (32) mit dem ersten Lötabschnitt (1131) verschweißt ist und der erste Lötabschnitt (1131) zwischen dem ersten Befestigungsabschnitt (31) und dem ersten Verbindungsabschnitt (32) angeordnet ist; und
wobei der zweite Verbindungsstreifen (40) einen zweiten Befestigungsabschnitt (41) und einen zweiten Verbindungsabschnitt (42) umfasst, wobei der zweite Befestigungsabschnitt (41) mit der ersten Leiterplatte (20) verlötet ist, der zweite Verbindungsabschnitt (42) mit dem zweiten Lötabschnitt (1231) verschweißt ist und der zweite Lötabschnitt (1231) zwischen dem zweiten Befestigungsabschnitt (41) und dem zweiten Verbindungsabschnitt (42) angeordnet ist.

4. Batteriemodul (100) nach Anspruch 3, wobei der erste Befestigungsabschnitt (31) und der erste Verbindungsabschnitt (32) den ersten Lötabschnitt (1131) einklemmen, wobei eine Oberfläche des ersten Lötabschnitts (1131) mit dem ersten Verbindungsabschnitt (32) in Kontakt steht und eine gegenüberliegende Oberfläche des ersten Lötabschnitts (1131) mit dem ersten Befestigungsabschnitt (31) in Kontakt steht; und
wobei der zweite Befestigungsabschnitt (41) und der zweite Verbindungsabschnitt (42) den zweiten Lötabschnitt (1231) einklemmen, wobei eine Oberfläche des zweiten Lötabschnitts (1231) mit dem zweiten Verbindungsabschnitt (42) in Kontakt steht und eine gegenüberliegende Oberfläche des zweiten Lötabschnitts (1231) mit dem zweiten Befestigungsabschnitt (41) in Kontakt steht.

5. Batteriemodul (100) nach Anspruch 3, wobei der erste Lötabschnitt (1131) zwischen der ersten Oberfläche (1014) der ersten Batteriezelle (11) und der ersten Leiterplatte (20) angeordnet ist und der zweite Lötabschnitt (1231) zwischen der zweiten Oberfläche (1015) der zweiten Batteriezelle (12) und der ersten Leiterplatte (20) angeordnet ist.

6. Batteriemodul (100) nach Anspruch 3, wobei die erste Leiterplatte (20) eine erste Seite (21) und eine zweite Seite (22) umfasst, die einander gegenüberliegend angeordnet sind, wobei die erste Lasche (113) auf der ersten Seite (21) angeordnet ist und die zweite Lasche (123) auf der zweiten Seite (22) angeordnet ist.

7. Batteriemodul (100) nach einem der Ansprüche 2 bis 6, wobei das Batteriemodul (100) ferner ein erstes Isolierstück (51) und ein zweites Isolierstück (52) umfasst, wobei das erste Isolierstück (51) wenigstens einen Teil der Dichtungskante (1013) der ersten Batteriezelle (11) umschließt und das zweite Isolierstück (52) wenigstens einen Teil der Dichtungskante (1013) der zweiten Batteriezelle (12) umschließt.

8. Batteriemodul (100) nach Anspruch 7, wobei in dem ersten Isolierstück (51) eine erste Öffnung (511) vorgesehen ist, wobei die erste Lasche (113) aus der ersten Öffnung (511) herausragt, wobei in dem zweiten Isolierstück (52) eine zweite Öffnung (521) vorgesehen ist und wobei die zweite Lasche (123) aus der zweiten Öffnung (521) herausragt.

9. Batteriepack (200), wobei das Batteriepack (200) eine Schale (70) und das Batteriemodul (100) nach einem der Ansprüche 1 bis 8 umfasst und wobei das Batteriemodul (100) in der Schale (70) aufgenommen ist.

10. Batteriepack (200) nach Anspruch 9, wobei das Batteriepack (200) ferner eine zweite Leiterplatte (60) umfasst, wobei ein Ende der zweiten Leiterplatte (60) mit der ersten Leiterplatte (20) des Batteriemoduls (100) verbunden ist und ein anderes Ende der zweiten Leiterplatte (60) aus der Schale (70) herausragt.

11. Batteriepack (200) nach Anspruch 10, wobei die Schale (70) eine bogenförmige Bodenplatte (71) umfasst, wobei an einer inneren Seitenwand der bogenförmigen Bodenplatte (71) eine erste Nut (711) und eine zweite Nut (712) vorgesehen sind;
wobei das Batteriepack (200) ferner einen ersten Abstandshalter (81) und einen zweiten Abstandshalter (82) umfasst;
wobei der erste Abstandshalter (81) zwischen der ersten Batteriezelle (11) des Batteriemoduls (100) und der ersten Nut (711) angeordnet ist und der zweite Abstandshalter (82) zwischen der zweiten Batteriezelle (12) des Batteriemoduls (100) und der zweiten Nut (712) angeordnet ist.

12. Batteriepack (200) nach Anspruch 9, wobei ein Befestigungselement (90) aus Harz besteht, wobei das Befestigungselement (90) dazu ausgebildet ist, einen Spalt zwischen der Schale (70) und der Zellbaugruppe des Batteriemoduls (100) auszufüllen.

13. Batteriepack (200) nach Anspruch 12, wobei an der Schale (70) eine Einspritzöffnung (721) vorgesehen ist und wobei das Harz die Schale (70) mittels Niederdruck-Spritzgießens ausfüllt.

14. Elektronische Vorrichtung (300), wobei die elektronische Vorrichtung (300) eine elektrische Komponente (301) und das Batteriepack (200) nach einem der Ansprüche 9 bis 13 umfasst und wobei die elektrische Komponente (301) elektrisch mit dem Batteriepack (200) verbunden ist.

## Revendications

1. Un module de batterie (100), comprenant :
un assemblage de cellules comprenant une pluralité de cellules de batterie (10) ;
et
une première carte de circuit (20), la pluralité de cellules de batterie (10) étant connectée à la première carte de circuit (20) ;
dans lequel la pluralité de cellules de batterie (10) comprend une première cellule de batterie (11) et une seconde cellule de batterie (12), et la première cellule de batterie (11) est inclinée par rapport à la seconde cellule de batterie (12) ;
la première carte de circuit (20) étant disposée entre la première cellule de batterie (11) et la seconde cellule de batterie (12), la première carte de circuit (20) étant inclinée par rapport à la première cellule de batterie (11) et la première carte de circuit (20) étant inclinée par rapport à la seconde cellule de batterie (12) ; et
dans lequel chaque cellule de batterie (10) comprend un boîtier (101) et un assemblage d'électrodes (102) logé dans le boîtier (101), l'assemblage d'électrodes (102) comprenant une languette (103) ;
**caractérisé en ce que** le boîtier (101) comprend un premier plan principal (1011) et un second plan principal (1012) disposés en vis-à-vis l'un de l'autre selon une direction d'épaisseur de la cellule de batterie (10), un bord de scellement (1013) est disposé à une extrémité du boîtier (101) selon une direction de longueur de la cellule de batterie (10), et la languette (103) s'étend hors du boîtier (101) à partir du bord de scellement (1013) ;
le boîtier (101) comprend en outre une première surface (1014) et une seconde surface (1015), la première surface (1014) reliant le bord de scellement (1013) et le premier plan principal (1011), la seconde surface (1015) reliant le bord de scellement (1013) et le second plan principal (1012), et une largeur de la première surface (1014) étant supérieure à une largeur de la seconde surface (1015) selon la direction d'épaisseur.

2. Le module de batterie (100) selon la revendication 1, dans lequel la première cellule de batterie (11) comprend une première languette (113), la seconde cellule de batterie (12) comprend une seconde languette (123), et la première languette (113) est disposée en regard de la seconde languette (123) ;
la première carte de circuit (20) étant disposée entre la première languette (113) et la seconde languette (123).

3. Le module de batterie (100) selon la revendication 2, dans lequel la première languette (113) comprend une première portion de soudage (1131), et la seconde languette (123) comprend une seconde portion de soudage (1231) ;
le module de batterie (100) comprenant une première bande de connexion (30) et une seconde bande de connexion (40) ;
la première bande de connexion (30) comprenant une première portion de fixation (31) et une première portion de connexion (32), la première portion de fixation (31) étant soudée à la première carte de circuit (20), la première portion de connexion (32) étant soudée par résistance à la première portion de soudage (1131), et la première portion de soudage (1131) étant disposée entre la première portion de fixation (31) et la première portion de connexion (32) ; et
la seconde bande de connexion (40) comprenant une seconde portion de fixation (41) et une seconde portion de connexion (42), la seconde portion de fixation (41) étant soudée à la première carte de circuit (20), la seconde portion de connexion (42) étant soudée par résistance à la seconde portion de soudage (1231), et la seconde portion de soudage (1231) étant disposée entre la seconde portion de fixation (41) et la seconde portion de connexion (42).

4. Le module de batterie (100) selon la revendication 3, dans lequel la première portion de fixation (31) et la première portion de connexion (32) pincent la première portion de soudage (1131), une surface de la première portion de soudage (1131) étant en contact avec la première portion de connexion (32), et une surface opposée de la première portion de soudage (1131) étant en contact avec la première portion de fixation (31) ; et
la seconde portion de fixation (41) et la seconde portion de connexion (42) pincent la seconde portion de soudage (1231), une surface de la seconde portion de soudage (1231) étant en contact avec la seconde portion de connexion (42), et une surface opposée de la seconde portion de soudage (1231) étant en contact avec la seconde portion de fixation (41).

5. Le module de batterie (100) selon la revendication 3, dans lequel la première portion de soudage (1131) est disposée entre la première surface (1014) de la première cellule de batterie (11) et la première carte de circuit (20), et la seconde portion de soudage (1231) est disposée entre la seconde surface (1015) de la seconde cellule de batterie (12) et la première carte de circuit (20).

6. Le module de batterie (100) selon la revendication 3, dans lequel la première carte de circuit (20) comprend un premier côté (21) et un second côté (22) disposés en vis-à-vis l'un de l'autre, la première languette (113) étant disposée sur le premier côté (21), et la seconde languette (123) étant disposée sur le second côté (22).

7. Le module de batterie (100) selon l'une quelconque des revendications 2 à 6, dans lequel le module de batterie (100) comprend en outre une première pièce d'isolation (51) et une seconde pièce d'isolation (52), la première pièce d'isolation (51) enveloppant au moins une partie du bord de scellement (1013) de la première cellule de batterie (11), et la seconde pièce d'isolation (52) enveloppant au moins une partie du bord de scellement (1013) de la seconde cellule de batterie (12).

8. Le module de batterie (100) selon la revendication 7, dans lequel une première ouverture (511) est prévue dans la première pièce d'isolation (51), la première languette (113) faisant saillie à partir de la première ouverture (511), une seconde ouverture (521) étant prévue dans la seconde pièce d'isolation (52), et la seconde languette (123) faisant saillie à partir de la seconde ouverture (521).

9. Un bloc-batterie (200), dans lequel le bloc-batterie (200) comprend une coque (70) et le module de batterie (100) selon l'une quelconque des revendications 1 à 8, et le module de batterie (100) est logé dans la coque (70).

10. Le bloc-batterie (200) selon la revendication 9, dans lequel le bloc-batterie (200) comprend en outre une seconde carte de circuit (60), une extrémité de la seconde carte de circuit (60) étant connectée à la première carte de circuit (20) du module de batterie (100), et une autre extrémité de la seconde carte de circuit (60) faisant saillie hors de la coque (70).

11. Le bloc-batterie (200) selon la revendication 10, dans lequel la coque (70) comprend une plaque de fond arquée (71), une première rainure (711) et une seconde rainure (712) étant prévues sur une paroi latérale interne de la plaque de fond arquée (71) ;
le bloc-batterie (200) comprenant en outre une première entretoise (81) et une seconde entretoise (82) ;
la première entretoise (81) étant disposée entre la première cellule de batterie (11) du module de batterie (100) et la première rainure (711), et la seconde entretoise (82) étant disposée entre la seconde cellule de batterie (12) du module de batterie (100) et la seconde rainure (712).

12. Le bloc-batterie (200) selon la revendication 9, dans lequel un élément de fixation (90) est en résine, l'élément de fixation (90) étant configuré pour remplir un jeu entre la coque (70) et l'assemblage de cellules du module de batterie (100).

13. Le bloc-batterie (200) selon la revendication 12, dans lequel un orifice d'injection (721) est prévu sur la coque (70), et la résine remplit la coque (70) par moulage par injection à basse pression.

14. Un dispositif électronique (300), dans lequel le dispositif électronique (300) comprend un composant électrique (301) et le bloc-batterie (200) selon l'une quelconque des revendications 9 à 13, et le composant électrique (301) est électriquement connecté au bloc-batterie (200).
